# EUROPEAN PATENT APPLICATION

(11) **EP 4 693 794 A1**
(43) Date of publication of application: **11.02.2026**
(21) Application number: 25172519.8
(22) Date of filing: 25.04.2025
(51) Int. Cl.: H02J 3/14, H02J 3/32, H02J 3/38, H02J 13/00

(54) **CONTROL DEVICE, PHOTOVOLTAIC SYSTEM INCLUDING THE SAME, AND METHOD OF CONTROLLING PHOTOVOLTAIC SYSTEM**

(30) Priority: 06.08.2024 KR 20240104772
(71) Applicant: Hanwha Solutions Corporation, Jung-gu Seoul 04541 (KR)
(72) Inventor: LEE, Joon Min, 04541 Seoul (KR); MIN, Jun Hong, 04541 Seoul (KR); PARK, Min Gi, 04541 Seoul (KR); JO, Yeong Min, Seoul 04541 (KR)
(74) Representative: Mooser, Sebastian Thomas

(57) **Abstract**

A control device includes a memory, in which at least one program is stored, and a processor configured to operate by executing the at least one program. The processor is further configured to obtain information on whether a photovoltaic system is connected to a power grid, obtain input power, which the photovoltaic system is able to supply, and output power required by a load connected to the photovoltaic system and the power grid, and control one of a photovoltaic module and an energy storage system, which are included in the photovoltaic system, based on connection or disconnection of the power grid, the input power, and the output power.

## Description

### BACKGROUND

### 1. Field

The present disclosure relates to a control device, a photovoltaic system including the same, and a method of controlling the photovoltaic system.

### 2. Description of the Related Art

When a photovoltaic system is connected to a power grid, the photovoltaic system may supply power to a load or the power grid or to the load together with the power grid through a photovoltaic module or a battery according to the power generation state and/or the amount of power of the photovoltaic module.

For example, when power generation by photovoltaic modules is sufficient during the day, surplus power remaining after power is supplied to a load may be supplied to a power grid. When power generation by photovoltaic modules is not sufficient at night, power may be supplied to a load by using power from batteries. When a load is greater than the power that batteries can supply, power may be supplied to the load by using power from the batteries and power from a power grid.

In case where a power grid is cut off due to a power outage or other reasons, when power generation by photovoltaic modules is insufficient or impossible at night and when an energy storage system such as a battery is not provided, power may not be supplied to a load, and stable load response and cooperative operation between power conversion systems may be impossible.

Therefore, there is a need to develop a technology for stably supplying power to a load without complex communication or control system matching even in situations where there is a power outage or insufficient power supply.

Information disclosed in this Background section was already known to the inventors of the present invention before achieving the present invention or is technical information acquired in the process of achieving the present invention. Therefore, it may contain information that does not form the prior art that is already known to the public in this country.

### SUMMARY

Some embodiments according to the present disclosure provide a control device, a photovoltaic system including the same, and a method of controlling the photovoltaic system. The problems to be solved by the present disclosure are not limited to the problems mentioned above, and other problems and advantages of the present disclosure that are not mentioned may be understood by the following description and will be more clearly understood through the embodiments of the present disclosure. In addition, it will be appreciated that the problems and advantages to be solved by the present disclosure may be realized by the means defined in the appended claims and combinations of the means.

As a technical means for achieving the above-described technical task, an aspect of the present disclosure provides a control device including a memory in which at least one program is stored and a processor configured to operate by executing the at least one program, wherein the processor is further configured to obtain information on whether a photovoltaic system is connected to a power grid, obtain input power, which the photovoltaic system is able to supply, and output power required by a load connected to the photovoltaic system and the power grid, and control one of a photovoltaic module and an energy storage system, which are included in the photovoltaic system, based on connection or disconnection of the power grid, the input power, and the output power.

Another aspect of the present disclosure provides a photovoltaic system including a server storing information related to an operation of the photovoltaic system, a photovoltaic module configured to generate power, an energy storage system configured to store at least part of the power, and a control device configured to monitor the photovoltaic module and the energy storage system and control operations of the photovoltaic module and the energy storage system, wherein the control device is configured to obtain information on whether the photovoltaic system is connected to a power grid, obtain input power, which the photovoltaic system is able to supply, and output power required by a load connected to the photovoltaic system and the power grid, and control one of a photovoltaic module and an energy storage system, which are included in the photovoltaic system, based on connection or disconnection of the power grid, the input power, and the output power.

A further aspect of the present disclosure provides a method of controlling a photovoltaic system. The method includes obtaining information on whether the photovoltaic system is connected to a power grid, obtaining input power, which the photovoltaic system is able to supply, and output power required by a load connected to the photovoltaic system and the power grid, and controlling one of a photovoltaic module and an energy storage system, which are included in the photovoltaic system, based on connection or disconnection of the power grid, the input power, and the output power.

Other aspects, features, and advantages than those described above will become apparent from the following drawings, claims, and detailed description.

### BRIEF DESCRIPTION OF THE DRAWINGS

The above and other aspects, features, and advantages of certain embodiments of the disclosure will be more apparent from the following description taken in conjunction with the accompanying drawings in which:
FIG. 1 is a diagram illustrating a photovoltaic system according to one embodiment of the present disclosure;
FIG. 2 is a block diagram illustrating an example of the internal configuration of a photovoltaic module, according to an embodiment of the present disclosure;
FIG. 3 is a block diagram illustrating an example of the internal configuration of an energy storage system, according to an embodiment of the present disclosure;
FIG. 4 is a block diagram illustrating an example of the internal configuration of a control device, according to an embodiment of the present disclosure;
FIG. 5 is a detailed circuit diagram of a photovoltaic system according to an embodiment of the present disclosure;
FIG. 6 is a detailed circuit diagram of a photovoltaic system according to another embodiment of the present disclosure;
FIG. 7 is a detailed circuit diagram of a photovoltaic system according to another embodiment of the present disclosure; and
FIG. 8 is a flowchart of a method of controlling a photovoltaic system, according to an embodiment of the present disclosure.

### DETAILED DESCRIPTION

The advantages and features of the present disclosure and methods of achieving them will become apparent by reference to the embodiments described in detail together with the accompanying drawings. However, the present disclosure is not limited to the embodiments presented below but may be implemented in various forms and should be understood to include all transformations, equivalents, or substitutes included in the spirit and technical scope of the present disclosure. Rather, these embodiments are provided so that this disclosure will be thorough and complete, and will fully convey the scope of the invention to one of ordinary skill in the art. In the description of the present disclosure, certain detailed explanations of the related art are omitted when it is deemed that they may unnecessarily obscure the essence of the present invention.

The terminology used herein is merely used to describe particular embodiments and is not intended to limit the present disclosure. Unless otherwise defined, all terms used herein have the same meaning as commonly understood by one of ordinary skill in the art to which this disclosure belongs.

In this specification, singular expressions include plural expressions unless the context clearly indicates otherwise. Furthermore, it is to be understood that the terms such as "including," "having," and "comprising" are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added.

While such terms "first," "second," etc. including ordinal numbers may be used to describe various components, such components should not be limited to the above terms. The terms are used solely to distinguish one component from another.

The phrases "in an embodiment," "according to an embodiment," "relating to an embodiment," or "according to an implementation of an embodiment" used in the specification do not necessarily indicate to the same embodiment. In addition, throughout the specification, the term "embodiment" is an arbitrary distinction used to facilitate the description of the present disclosure, and embodiments are not necessarily exclusive of each other. For example, configurations mentioned for the purpose of describing one embodiment may be applied to and/or implemented in other embodiments with modifications, without departing from the scope of the present disclosure.

Some embodiments of the present disclosure may be represented by functional block configurations and various processing operations. Some or all of these functional blocks may be implemented using any number of hardware and/or software components that perform specific functions. For example, the functional blocks of the present disclosure may be implemented using one or more microprocessors or circuits for a given function.

Also, for example, the functional blocks of the present disclosure may be implemented in various programming or scripting languages. The functional blocks may be implemented with algorithms running on one or more processors. The present disclosure may also employ conventional techniques for electronic configuration, signal processing, and/or data processing. The terms "mechanism," "element," "means," and "configuration" may be used in a broad sense and are not limited to mechanical and physical configurations. Terminology such as "part (or unit)" and "module" may indicate a unit which processes at least one function or operation and may be implemented by hardware, software, or a combination thereof.

Furthermore, the connecting lines or connecting members between the components depicted in the drawings are intended to represent exemplary functional relationships and/or physical or logical connections between the components. In a practical device, many alternative or additional functional, physical, or logical connections between components may be presented.

The size or proportion of some components in the drawings may be somewhat exaggerated. Components in one drawing may not be shown in another drawing.

The present disclosure will be described in detail with reference to the attached drawings below.

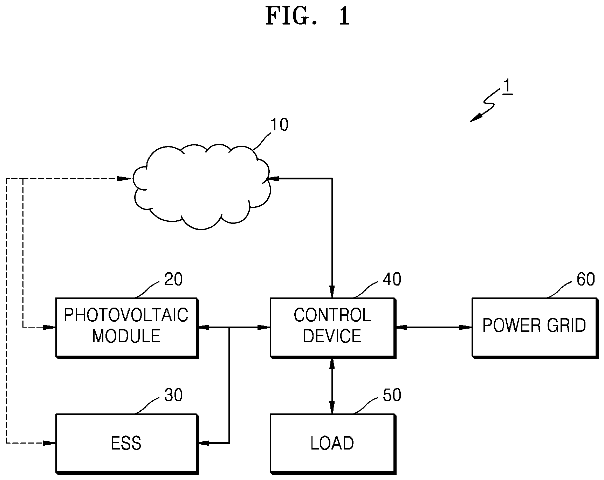

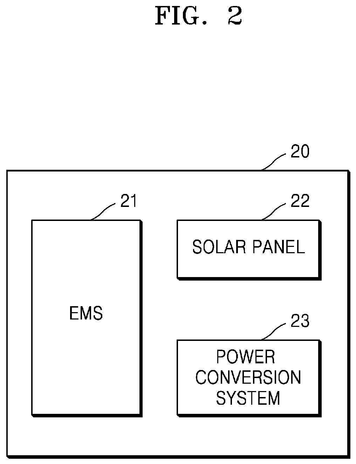

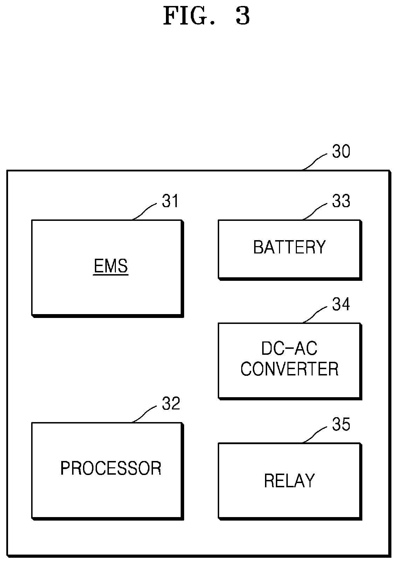

FIG. 1 is a diagram illustrating a photovoltaic system according to one embodiment of the present disclosure. FIG. 2 is a block diagram illustrating an example of the internal configuration of a photovoltaic module, according to an embodiment of the present disclosure. FIG. 3 is a block diagram illustrating an example of the internal configuration of an energy storage system, according to an embodiment of the present disclosure.

Referring to FIG. 1, according to an embodiment of the present disclosure, a photovoltaic system 1 may include a server 10, a photovoltaic module 20, an energy storage system (ESS) 30, a control device 40, a load 50, and a power grid 60.

For example, components included in the photovoltaic system 1 may be connected by building a communication network and may exchange data with each other. For example, the server 10 may build a communication network using Ethernet with the photovoltaic module 20, the ESS 30, or the control device 40. The control device 40 may be connected to the photovoltaic module 20 and the ESS 30 via controller area network (CAN) communication. The components may be connected to each other via wireless or wired communication, and the communication method in the present disclosure is not limited to either one.

In an embodiment of the present disclosure, the server 10 may refer to a device that stores various types of information related to the operation of the photovoltaic system 1. For example, the server 10 may store whether the power grid 60 is connectible, state information of the photovoltaic module 20, or state information of the ESS 30. In an embodiment, the server 10 may collect state information of the photovoltaic module 20 and state information of the ESS 30 through the control device 40 or may receive the state information of the photovoltaic module 20 directly from the photovoltaic module 20 and the state information of the ESS 30 directly from the ESS 30.

In an embodiment, the server 10 may transmit an operating instruction regarding the photovoltaic system 1 from a user to the control device 40. In an embodiment, the server 10 may transmit the operating instruction to the control device 40 through an energy management system (EMS) of the photovoltaic module 20 or an EMS of the ESS 30. Alternatively, a user's operating instruction may be stored in the server 10, transmitted by the server 10 to the EMS of the photovoltaic module 20 or the EMS of the ESS 30, and transmitted by each EMS to the control device 40, and stored in the control device 40. In an embodiment, the control device 40 may generate a control signal for controlling the photovoltaic module 20 or the ESS 30 based on the operating instruction, as described below.

In an embodiment of the present disclosure, the server 10 may refer to a cloud server. However, the form of the server 10 in the present disclosure is not limited thereto.

In an embodiment of the present disclosure, the photovoltaic module 20 may refer to a device that converts sunlight energy incident to the surface thereof into electrical energy via the photoelectric effect and outputs power of a certain voltage.

Referring to FIG. 2, according to an embodiment, the photovoltaic module 20 may include an EMS 21, a solar panel 22, and a power conversion system 23.

In an embodiment, the EMS 21 may refer to a device that controls the operation of the photovoltaic module 20. In an embodiment, the EMS 21 may receive a user's operating instruction from the server 10. The EMS 21 may also transmit the user's operating instruction to the control device 40.

In the present disclosure, the photovoltaic module 20 may communicate with and control the control device 40. For example, as described below, the EMS 21 may control the operation of the photovoltaic module 20 based on a control signal received from the control device 40.

In an embodiment, the power conversion system 23 may refer to a system that converts direct current (DC) power generated by the solar panel 22 into alternating current (AC) power. For example, the power conversion system 23 may include a microinverter. For example, the microinverter may convert power generated by the solar panel 22 into AC power.

In an embodiment, the photovoltaic module 20 may further include a current transformer. For example, the current transformer may measure the current generated by the solar panel 22.

In an embodiment of the present disclosure, the ESS 30 may refer to a device that stores at least part of the power generated by the photovoltaic module 20. In an embodiment, the ESS 30 may convert DC power generated by the photovoltaic module 20 into AC power. The ESS 30 may also convert AC power into DC power to charge a battery and may store the DC power in the battery. In an embodiment, the ESS 30 may supply stored power to the load 50 or the power grid 60.

Referring to FIG. 3, according to an embodiment, the ESS 30 may include an EMS 31, a processor 32, a battery 33, a DC-AC converter 34, and at least one relay 35.

In an embodiment, the EMS 31 may refer to a device that controls the operation of the ESS 30. In an embodiment, the EMS 31 may receive a user's operating instruction from the server 10. The EMS 31 may also transmit the user's operating instruction to the control device 40.

In the present disclosure, the ESS 30 may communicate with and control the control device 40. For example, as described below, the EMS 31 may control the operation of the ESS 30 based on a control signal received from the control device 40.

In an embodiment, the processor 32 may refer to a digital signal processing device that processes a control command generated by the EMS 31.

In an embodiment, the ESS 30 may include the battery 33 that stores power. For example, the ESS 30 may store all or part of the power output from the photovoltaic module 20 in the battery 33. Specifically, the ESS 30 may supply power, which is output from the photovoltaic module 20 and converted into AC, to the load 50 and may store the remnant of the power in the battery 33. The ESS 30 may also supply power stored in the battery 33 to a load, which requires essential power supply, when power supply to the load is required. The ESS 30 may also supply power stored in the battery 33 to the load 50 when the ESS 30 is disconnected from the power grid 60 and the power generated from the photovoltaic module 20 is not sufficient. However, the operation of the ESS 30 is not limited to those described above.

In an embodiment, the ESS 30 may include the DC-AC converter 34. For example, the DC-AC converter 34 may convert AC power into DC power so that after power, which is output from the photovoltaic module 20 and converted into AC power, is supplied to the load 50, the remnant of the power may be stored in the battery 33. The DC-AC converter 34 may convert the DC power stored in the battery 33 into AC power so that the AC power may be supplied to the load 50.

In an embodiment, the ESS 30 may also store at least one optionally connectable external distributed energy resource (DER) in addition to the power produced by the photovoltaic module 20. In the present disclosure, the DER may include, but are not limited to, solar power, wind power, hydropower, etc.

In an embodiment of the present disclosure, the load 50 may refer to a device that receives power from at least one selected from the group consisting of the photovoltaic module 20, the ESS 30, and the power grid 60 and consumes electrical energy. For example, the load 50 may include a coffee pot, an iron, a microwave oven, a refrigerator, a boiler, or the like, which is used at home. In the present disclosure, the type of load 50 is not limited.

In an embodiment of the present disclosure, the power grid 60 may receive power from the photovoltaic module 20 or the ESS 30. The power grid 60 may supply power to the load 50.

In the present disclosure, a state in which the photovoltaic system 1 and the power grid 60 are connected to each other may be referred to as an on-state, and a state in which the photovoltaic system 1 and the power grid 60 are disconnected from each other may be referred to as an off-state.

For example, when the power grid 60 is in an on-state, the power grid 60 may supply power required by the load 50. For example, when the power grid 60 is in an off-state due to a power outage or other reasons, the power grid 60 may not supply power required by the load 50. In this case, the photovoltaic module 20 or the ESS 30 may supply the power required by the load 50.

In an embodiment, the power grid 60 may include a sensing device that detects a connection state of the photovoltaic system 1 and the power grid 60. For example, the sensing device may transmit, to the control device 40, information about whether the connection of the power grid 60 is detected. In another embodiment, the power grid 60 may further include a relay that controls an on- or off-operation of the power grid 60 based on whether the photovoltaic system 1 and the power grid 60 are connected to each other. In another embodiment, the power grid 60 may further include a measuring device that measures power supplied from the photovoltaic system 1 to the power grid 60.

In an embodiment of the present disclosure, the control device 40 may refer to a device that controls a component or a subsystem included in the photovoltaic system 1.

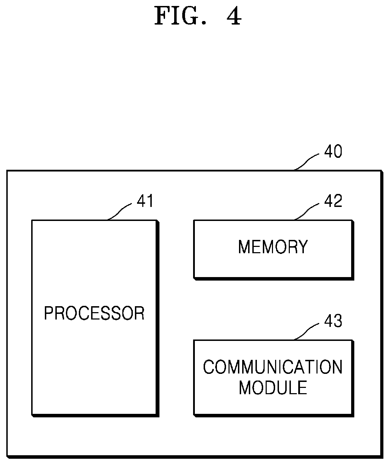

Referring to FIG. 4, a control device 40 according to an embodiment may include a processor 41 and at least one memory 42. Hereinafter, the operations described as being performed by the processor 41 may be understood as being performed by the control device 40.

In the present disclosure, the control device 40 may generate a control signal for controlling the operation of the photovoltaic module 20 or the ESS 30 based on a user's operating instruction.

In an embodiment, the processor 41 may control the photovoltaic module 20 or the ESS 30 to supply and back up power to the load 50.

In more detail, the processor 41 may generate a control signal for controlling the photovoltaic module 20 or the ESS 30 based on connection or disconnection of the power grid 60 and input power and output power of the photovoltaic system 1. Here, the input power of the photovoltaic system 1 may refer to power that the photovoltaic system 1 is able to supply, and the output power may refer to output power required by a load connected to the photovoltaic system 1 and the power grid 60. For example, the processor 41 may obtain input power based on information received from the photovoltaic module 20 and/or information received from the ESS 30 and may obtain output power based on information received from the load 50. In an embodiment, the output power may refer to power obtained further taking into account information (e.g., power) received from the power grid 60.

In an embodiment, the processor 41 may further consider state information of the photovoltaic module 20 or the ESS 30 to generate a control signal for controlling the photovoltaic module 20 or the ESS 30.

In the present disclosure, "back up" means that in addition to the case where the photovoltaic system 1 operates normally and supplies power to the load 50, power is still stably supplied to the load 50 through various methods described in the present disclosure when the power grid 60 is not connected. Hereinafter, an operation method of the photovoltaic system 1 that supplies power to the load 50 while being connected to the power grid 60 is referred to as an on-grid operation method, and an operation method of the photovoltaic system 1 that supplies power to the load 50 while not connected to the power grid 60 is referred to as an off-grid operation method. However, "supply" and "back up" are interchangeably used depending on the need.

To generate a control signal, the processor 41 may continuously monitor various pieces of information received from the photovoltaic module 20, the ESS 30, the load 50, and the power grid 60.

In an embodiment, the processor 41 may obtain state information of the photovoltaic module 20. For example, the processor 41 may obtain an operation mode of the photovoltaic module 20 (e.g., an automatic mode, a manual mode, or a time-of-use (TOU) mode). For example, the processor 41 may obtain identification information (e.g., an identifier (ID)) of an EMS included in the photovoltaic module 20.

In an embodiment, the processor 41 may obtain state information of the ESS 30. For example, the processor 41 may obtain a battery state (e.g., a charge state, a discharge state, a charge amount, temperature, etc.) of the ESS 30. For example, the processor 41 may obtain identification information (e.g., ID) of an EMS included in the ESS 30.

In an embodiment, the processor 41 may obtain state information of the load 50. For example, the processor 41 may obtain a power requirement of the load 50. For example, the processor 41 may obtain a power supply amount for the load 50. For example, the processor 41 may obtain information about whether there is surplus power compared to the amount of power supplied to the load 50 or whether additional power supply is required.

In an embodiment, the processor 41 may obtain state information of the power grid 60. For example, the processor 41 may obtain whether the power grid 60 is connected (e.g., a grid on or a grid off). For example, the processor 41 may obtain certain regulatory information or restriction information given for the power grid 60. For example, the processor 41 may obtain information about limits on the maximum current and maximum power of the power grid 60, regulations on the quality of power, limits on voltage and frequency, and an installation capacity of a distribution panel.

In an embodiment, the processor 41 may generate a control signal based on state information of at least one selected from the group consisting of the photovoltaic module 20, the ESS 30, the load 50, and the power grid 60. For example, an EMS of the photovoltaic module 20 or an EMS of the ESS 30 may operate based on a control signal from the processor 41.

In an embodiment, the processor 41 may control the photovoltaic module 20 or the ESS 30 to supply power to the load 50. For example, the processor 41 may control a relay, which is included in the photovoltaic module 20 or the ESS 30, to be turned on or off. In an embodiment, supplied power may include power that has been produced by the photovoltaic module 20 or power that has been stored in the ESS 30. The processor 41 may control the photovoltaic module 20 and the ESS 30 such that power remaining after being supplied to the load 50 is stored in the ESS 30. The processor 41 may also control the photovoltaic module 20 or the ESS 30 such that power supplied to the load 50 does not exceed the installed capacity of the distribution panel.

In an embodiment, the processor 41 may control a power supply mode of the photovoltaic module 20 or the ESS 30. For example, the processor 41 may control the operation of the photovoltaic module 20 or the ESS 30 as a power source in an on-grid state or in an off-grid state, based on connection or disconnection of the power grid 60. In a specific example, the processor 41 may control the load response of the ESS 30 in the off-grid state and may limit the power output of the photovoltaic module 20 in the off-grid state. To control the power supply mode, the processor 41 may control a relay connected to the load 50 or the power grid 60. For example, when the on-grid state transits to the off-grid state, the processor 41 may turn off a relay connected to the power grid 60. Alternatively, when the off-grid state transits to the on-grid state, the processor 41 may turn on a relay connected to the power grid 60.

In another embodiment, the processor 41 may control the power output of the photovoltaic module 20.

For example, the processor 41 may control the power output of the photovoltaic module 20 based on the regulations (or restrictions) of the power grid 60.

For example, the processor 41 may control the power output of the photovoltaic module 20 based on whether there is a connection between components of the photovoltaic module 20. For example, when the photovoltaic module 20 is composed of components manufactured by different manufacturers, the processor 41 may control the power output of each of the plurality of photovoltaic modules 20 based on whether there is a connection between the components. To limit the power output of the photovoltaic module 20, the processor 41 may control a relay connected to the photovoltaic module 20.

For example, the processor 41 may control the power output of the photovoltaic module 20 based on the state of the battery 33 of the ESS 30. For example, the processor 41 may control the power output of the photovoltaic module 20 based on the charge/discharge state of the battery 33, the amount of power charged in the battery 33, and/or the like

For example, the processor 41 may determine whether to limit the power output of the photovoltaic module 20 based on a voltage of the load 50 and a reference voltage of the photovoltaic module 20.

In an embodiment, the processor 41 may control charging and discharging of the battery 33 included in the ESS 30.

In an embodiment, the processor 41 may control charging of the battery 33 by using power that remains after responding to the load 50.

In an embodiment, the processor 41 may control charging and discharging of the battery 33 based on regulations (or restrictions) of the power grid 60.

In an embodiment, the processor 41 may control forced charging of the battery 33 based on overdischarge of the battery 33. For example, the processor 41 may control the forced charging of the battery 33 by controlling the photovoltaic module 20 or the power grid 60 to supply power to the battery 33.

The memory 42 may include any non-transitory computer-readable recording medium. For example, the memory 42 may include a permanent mass storage device, such as random access memory (RAM), read-only memory (ROM), a disk drive, a solid state drive (SSD), or flash memory. For example, a permanent mass storage device, such as ROM, SSD, flash memory, or a disk drive, may be separate from the memory 42. Additionally, an operating system (OS) and at least one piece of program code may be stored in the memory 42.

These software components may be loaded from a computer-readable recording medium that is separate from the memory 42. The computer-readable recording medium may be directly connected to the control device 40 and may include, for example, a floppy drive, a disk, tape, a digital versatile disk (DVD)/compact disk (CD)-ROM drive, or a memory card. Alternatively, the software components may be loaded to the memory 42 via a communication module 43 rather than the computer-readable recording medium. For example, at least one program may be loaded to the memory 42, based on a computer program installed by files that a developer or a file distribution system distributing installation files of an application provides via the communication module 43.

The communication module 43 may provide a configuration or function for the control device 40 to communicate with an external device via a network. For example, a control signal, a command, data, or the like provided under control by the processor 41 may be transmitted to an external device via the communication module 43 and a network.

In an embodiment, the communication module 43 may receive a user's operating instruction transmitted by an EMS of the photovoltaic module 20 or an EMS of the ESS 30. The communication module 43 may also transmit a control signal, which is generated based on a user's operating instruction, connection or disconnection of the power grid 60, and the state information of the photovoltaic system 1, to a component, e.g., the photovoltaic module 20 or the ESS 30, of the photovoltaic system 1.

In an embodiment, the communication module 43 may receive state information regarding the photovoltaic module 20 from the EMS of the photovoltaic module 20 or state information regarding the ESS 30 from the EMS of the ESS 30.

In an embodiment, the control device 40 may transmit the collected state information to the server 10. For example, the communication module 43 may transmit state information regarding the photovoltaic module 20 or state information regarding the ESS 30 to the server 10.

In another embodiment, the control device 40 may transmit state information regarding the photovoltaic module 20 to the server 10 via the ESS 30 or transmit state information regarding the ESS 30 to the server 10 via the photovoltaic module 20. For example, the communication module 43 may transmit the state information regarding the photovoltaic module 20 to the ESS 30. The state information regarding the photovoltaic module 20 transmitted to the ESS 30 may also be transmitted to the server 10. For example, the communication module 43 may transmit the state information regarding the ESS 30 to the photovoltaic module 20. The state information regarding the ESS 30 transmitted to the photovoltaic module 20 may also be transmitted to the server 10.

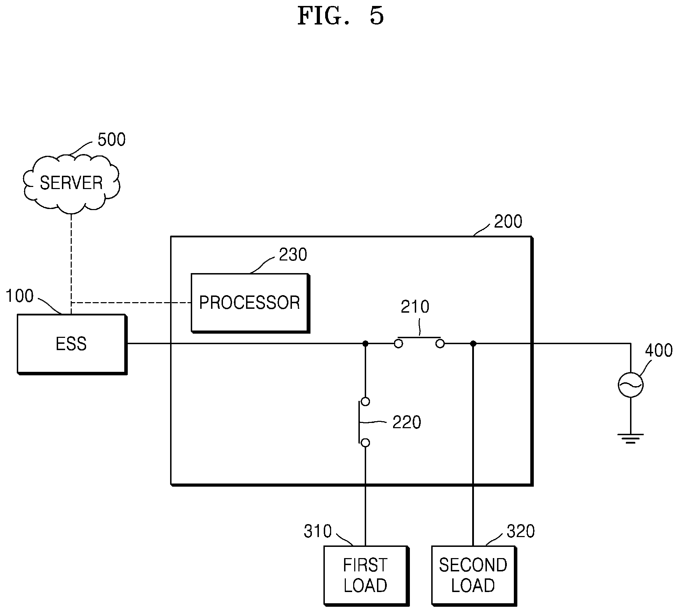

FIG. 5 is a detailed circuit diagram of a photovoltaic system according to an embodiment of the present disclosure.

Hereinafter, a backup device described with reference to FIGS. 5 to 7 may refer to the same device as the control device 40 in FIG. 1 or may refer to a device included in the control device 40. Accordingly, it may be understood that at least some of the operations performed by the backup device are performed by the control device 40.

In addition, an ESS 100 in FIG. 5 is described as including the photovoltaic module 20 and the ESS 30, which are separately described in FIGS. 1 to 4.

Referring to FIG. 5, in an embodiment of the present disclosure, a backup device 200 may include a main relay 210, a load relay 220, and a processor 230.

The main relay 210 may be between a power grid 400 and a load (e.g., a first load 310 in FIG. 5) and configured to perform an on-operation or an off-operation. The main relay 210 may be controlled to perform an on-operation or an off-operation according to a connectable state with respect to the power grid 400.

The load relay 220 may be between the ESS 100 and the load (e.g., the first load 310 in FIG. 5) and configured to perform an on-operation or an off-operation. The load relay 220 may be controlled to perform an on-operation or an off-operation according to the amount of output power and charge state of the ESS 100.

At this time, as shown in the drawings, in an embodiment, the load 50 of the photovoltaic system 1 may be divided into the first load 310 connected between the main relay 210 and the ESS 100 and a second load 320 connected between the main relay 210 and the power grid 400.

This is to perform backup for loads that should be supplied with power when the power grid 400 is disconnected although the backup device 200 backs up for all loads when backing up power supply to the loads. Through this, the components of the photovoltaic system 1 may be protected from overload, etc.

However, a method of dividing the load is not limited to that shown in FIG. 5. All loads may be arranged in front of the main relay 210, and an additional switch may be provided to enable backup for a load that should be supplied with power.

In addition, the first load 310 may include a plurality of different loads. However, for convenience of description, the first load 310 is assumed to be a single load.

According to an embodiment, the processor 230 may include, for example, a microcontroller unit (MCU) for power control. The processor 230 may control at least one other component (e.g., a hardware or software component) of the photovoltaic system 1 (excluding distributed energy resources) by executing software such as a program and may perform various data processing or calculations.

The processor 230 may monitor various data received from a photovoltaic module, the load, the power grid 400, or the like. For example, the processor 230 may identify connection or disconnection of the power grid 400 or the amount of output power and charge state of the ESS 100.

At this time, the processor 230 may be provided in the backup device 200 as shown in FIG. 5 and may communicate with the ESS 100 through a server 500 and control the ESS 100. However, without being limited thereto, the processor 230 may directly communicate with an internal processor (e.g., an MCU of an inverter) of the ESS 100. The processor 230 may be separately provided outside the backup device 200. Alternatively, processors 230 may be respectively provided inside and outside the backup device 200 and may perform operations through mutual communication. When a plurality of processors 230 are separately provided, the processors 230 may use CAN communication, local area network (LAN) communication, or the like. The communication method is not limited thereto. Hereinafter, for convenience of description, the processor 230 is considered to be provided inside the backup device 200.

According to an embodiment, the processor 230 may identify whether the power grid 400 is connectable and may control the main relay 210 to perform an off-operation when the power grid 400 is not in a connectable condition.

In this case, the processor 230 may control the ESS 100 to supply power to the first load 310.

According to an embodiment, even when the power grid 400 is disconnected, power supply to a load may be backed up through the ESS 100.

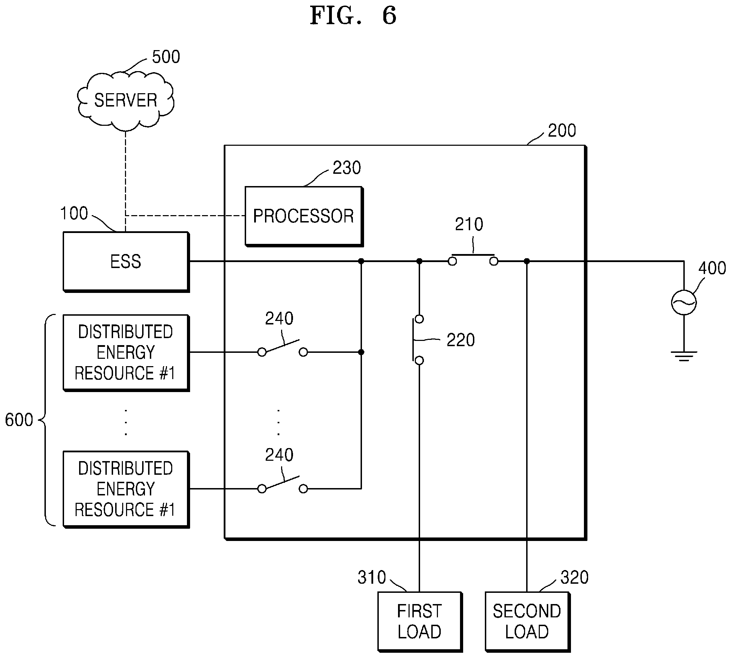

FIG. 6 is a detailed circuit diagram of a photovoltaic system according to another embodiment of the present disclosure.

The photovoltaic system of FIG. 6 is different from the photovoltaic system of FIG. 5 in that the photovoltaic system of FIG. 6 further includes at least one distributed energy resource 600 (e.g., distributed energy resource #1, ..., distributed energy resource #N), and thus, redundant descriptions given with reference to FIG. 5 are borrowed from the descriptions of FIG. 5.

As described above, the ESS 100 may perform communication and control and may include a company's energy storage system or a distributed energy resource having a communication standard compatible with the company's energy storage system. The ESS 100 may be compatible with both an AC-coupled energy storage system that may be matched with and may control a micro-inverter system, particularly in the case of a solar inverter, and a hybrid photovoltaic DC-coupled system consisting of a battery pack DCDC and a photovoltaic inverter, which may be matched with and may control a DC-optimizer system.

According to an embodiment, the distributed energy resource 600 may not communicate with the processor 230 and may include various resources that a customer wishes to use. The distributed energy resource 600 may include, for example, a photovoltaic inverter, a micro inverter, a DC optimizer, a wind turbine, a diesel generator, or the like. According to an embodiment, when the distributed energy resource 600 operates in association with the backup device 200, a load response and charging of the ESS 100 may be performed by selective connection through simple plug-in without complex communication or control matching. To this end, the backup device 200 may further include a first switch 240 corresponding to each distributed energy resource 600.

According to an embodiment, the distributed energy resource 600 may supply power to a battery of the ESS 100. According to an embodiment, the processor 230 may monitor the amount of output power and charge state of the ESS 100 and control the first switch 240 to be turned on or off as needed to control power supply.

According to an embodiment, the ESS 100 may stably back up power supply to a load through power support of the distributed energy resource 600.

According to an embodiment, the ESS 100 may operate as an auxiliary power source for the power grid 400 in a grid-connected mode so that the backup device 200 may operate in connection with the ESS 100 and the distributed energy resource 600. In an independent operation mode, the ESS 100 may be required to handle the demand of the entire load without connection with the power grid 400 so that the ESS 100 may be defined as a voltage source and may perform an operation based on voltage control. Simultaneously, the backup device 200 may also be connected to the ESS 100 or the distributed energy resource 600.

According to an embodiment, a photovoltaic system may be expanded through parallel control over the ESS 100 and the distributed energy resource 600 without using complex control or communication, and power supply to a load may also be backed up stably. Therefore, the photovoltaic system 1 may be flexibly configured and may have efficiency and economic feasibility by utilizing surplus energy.

According to an embodiment, the backup device 200 may be easily connected with other distributed energy resources so that the photovoltaic system 1 may operate while meeting the energy demand of the entire load.

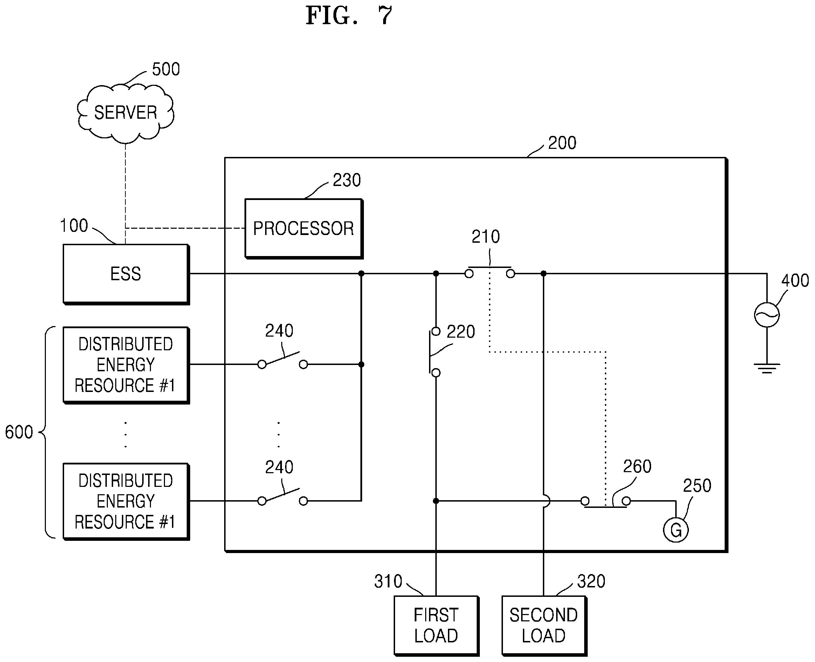

FIG. 7 is a detailed circuit diagram of a photovoltaic system according to another embodiment of the present disclosure.

The photovoltaic system of FIG. 7 differs from that of FIG. 6 only in that the photovoltaic system of FIG. 7 further includes a generator 250 and a second switch 260, and thus, redundant descriptions given with reference to FIGS. 5 and 6 are borrowed from the descriptions of FIGS. 5 and 6.

According to an embodiment, the backup device 200 may further include the generator 250 and the second switch 260 connecting the generator 250 to a load (e.g., the first load 310). At this time, the second switch 260 may be implemented to operate complementarily with the main relay 210. When the main relay 210 is turned on, the second switch 260 may be turned off. When the main relay 210 is turned off, the second switch 260 may be turned on.

According to an embodiment, the generator 250 may operate as a power source apart from the ESS 100 and the distributed energy resource 600. The generator 250 may supply power to the first load 310 when power supply from the ESS 100 is not available and/or when the load relay 220 is turned off.

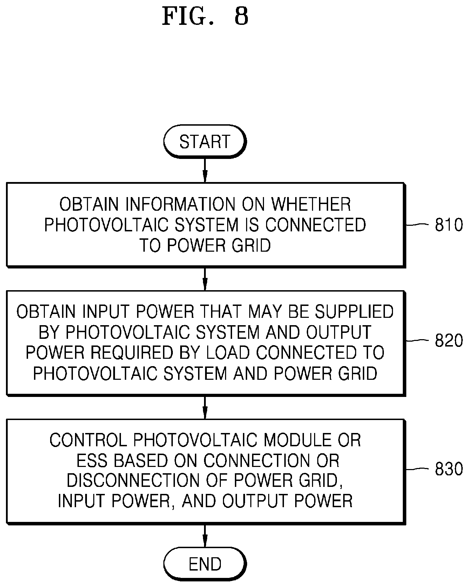

FIG. 8 is a flowchart of a method of controlling a photovoltaic system, according to an embodiment of the present disclosure.

Referring to FIG. 8, the method according to an embodiment may include operations 810 to 830. In addition, at least some of the operations described as being performed by a control device or a backup device may be included in the method.

The control device may obtain information on whether a photovoltaic system is connected to a power grid in operation 810.

For example, the control device may receive the information from a sensing device that detects a connection state of the photovoltaic system to the power grid.

Thereafter, the control device may obtain input power that may be supplied by the photovoltaic system and output power required by a load, which is connected to the photovoltaic system and the power grid, in operation 820.

In an embodiment, the control device may obtain first state information regarding a photovoltaic module and second state information regarding an ESS.

Thereafter, the control device may control the photovoltaic module or the ESS based connection or disconnection of the power grid, the input power, and the output power in operation 830.

In an embodiment, the control device may control the photovoltaic module or the ESS further taking into account the first state information and the second state information.

In an embodiment, the control device may control the ESS to supply power to the load based on the fact that the power grid is not connected and that the amount of charge in the ESS is greater than the amount of charge energy that is insufficient to be continuously supplied to the load.

In an embodiment, the control device may determine whether to limit the power output of the photovoltaic module based on the voltage of the load and the reference voltage of the photovoltaic module.

In an embodiment, the control device may control the charging of a battery included in the ESS by using power, which is generated by the photovoltaic module and remains after being used to respond to the load.

In an embodiment, the charge amount of the battery included in the ESS may be controlled based on an overcharge state or an overdischarge state of the battery.

According to the problem solving means of the present disclosure described above, a photovoltaic system with a simple configuration may be provided.

The effects of the embodiments are not limited to the effects mentioned above, and other effects that have not been mentioned will be clearly understood by one of ordinary skilled in the art from the descriptions herein.

An embodiment of the present disclosure may be embodied as a computer program that may be executed on a computer using various components. The computer program may be recorded in a computer-readable medium. At this time, the computer-readable medium may include, but not limited to, a magnetic medium such as a hard disk, a floppy disks, or magnetic tape, an optical recording medium such as CD-ROM or DVD, a magneto-optical medium such as a floptical disk, or a hardware device, such as ROM, RAM, or flash memory, which is specifically configured to store and execute program instructions.

The computer program may be specially designed and configured for the present disclosure or may be known and available to those skilled in the field of computer software. Examples of the computer program may include machine code created by a compiler and high-level language code that may be executed on a computer using an interpreter.

According to an embodiment, a method according to various embodiments of the present disclosure may be included in a computer program product. The computer program product may be traded between a seller and a buyer as a commodity. The computer program product may be distributed as a machine-readable storage medium (e.g., a CD-ROM) or may be distributed online (e.g., downloading or uploading) via an application store (e.g., Play StoreTM), or directly between two user devices. In the case of online distribution, at least a portion of the computer program product may be temporarily stored or temporarily created in a machine-readable storage medium, such as memory of a manufacturer's server, an application store's server, or a proxy server.

The operations of the method described herein can be performed in any suitable order unless otherwise indicated herein or otherwise clearly contradicted by context. The present disclosure is not necessarily limited to the described order of the operations. The use of any or all examples, or exemplary language (e.g., "such as") provided herein, is intended merely to better illuminate the present disclosure and does not pose a limitation on the scope of the present disclosure unless otherwise claimed. Numerous modifications and adaptations will be readily apparent to one of ordinary skill in the art without departing from the spirit and scope of the appended claims or their equivalents.

Therefore, the spirit of the present disclosure should not be limited to the embodiments described above, and the scope of the following claims and the scope of equivalents of the claims or the equivalently modified scope are all included in the spirit of the present disclosure.

## Claims

1. A control device comprising:
a memory in which at least one program is stored; and
a processor configured to operate by executing the at least one program,
wherein the processor is further configured to
obtain information on whether a photovoltaic system is connected to a power grid,
obtain input power, which the photovoltaic system is able to supply, and output power required by a load connected to the photovoltaic system and the power grid, and
control one of a photovoltaic module and an energy storage system, which are included in the photovoltaic system, based on connection or disconnection of the power grid, the input power, and the output power.

2. The control device of claim 1, wherein
the processor is further configured to
obtain first state information regarding the photovoltaic module and second state information regarding the energy storage system and
control one of the photovoltaic module and the energy storage system based on the first state information and the second state information.

3. The control device of claim 1 or 2, wherein
the processor is further configured to control the energy storage system to supply power to the load based on the disconnection of the power grid and a charge amount of the energy storage system that is greater than an amount of charge energy that is insufficient to be continuously supplied to the load.

4. The control device of any one of claims 1 to 3, wherein
the processor is further configured to determine whether to limit power output of the photovoltaic module based on a voltage of the load and a reference voltage of the photovoltaic module.

5. The control device of any one of claims 1 to 4, wherein
the processor is further configured to control charging of a battery included in the energy storage system by using power, which is generated by the photovoltaic module and remains after being used to respond to the load.

6. The control device of any one of claims 1 to 5, wherein
the processor is further configured to control a charge amount of a battery included in the energy storage system based on an overcharge state or an overdischarge state of the battery.

7. A photovoltaic system comprising:
a server storing information related to an operation of the photovoltaic system;
a photovoltaic module configured to generate power;
an energy storage system configured to store at least part of the power; and
a control device configured to monitor the photovoltaic module and the energy storage system and control operations of the photovoltaic module and the energy storage system,
wherein the control device is configured to
obtain information on whether the photovoltaic system is connected to a power grid,
obtain input power, which the photovoltaic system is able to supply, and output power required by a load connected to the photovoltaic system and the power grid, and
control one of a photovoltaic module and an energy storage system, which are included in the photovoltaic system, based on connection or disconnection of the power grid, the input power, and the output power.

8. The photovoltaic system of claim 7, wherein
the control device is further configured to
obtain first state information regarding the photovoltaic module and second state information regarding the energy storage system and
control one of the photovoltaic module and the energy storage system based on the first state information and the second state information.

9. The photovoltaic system of claim 7 or 8, wherein
the control device is further configured to control the energy storage system to supply the power to the load based on the disconnection of the power grid and a charge amount of the energy storage system that is greater than an amount of charge energy that is insufficient to be continuously supplied to the load.

10. The photovoltaic system of any one of claims 7 to 9, wherein
the control device is further configured to determine whether to limit power output of the photovoltaic module based on a voltage of the load and a reference voltage of the photovoltaic module.

11. A method of controlling a photovoltaic system, the method comprising:
obtaining information on whether the photovoltaic system is connected to a power grid;
obtaining input power, which the photovoltaic system is able to supply, and output power required by a load connected to the photovoltaic system and the power grid; and
controlling one of a photovoltaic module and an energy storage system, which are included in the photovoltaic system, based on connection or disconnection of the power grid, the input power, and the output power.

12. The method of claim 11, further comprising
obtaining first state information regarding the photovoltaic module and second state information regarding the energy storage system,
wherein the controlling includes controlling one of the photovoltaic module and the energy storage system based on the first state information and the second state information.

13. The method of claim 11 or 12, wherein
the controlling includes controlling the energy storage system to supply power to the load based on the disconnection of the power grid and a charge amount of the energy storage system that is greater than an amount of charge energy that is insufficient to be continuously supplied to the load.

14. The method of any one of claims 11 to 13, wherein
the controlling includes determining whether to limit power output of the photovoltaic module based on a voltage of the load and a reference voltage of the photovoltaic module.

15. The method of any one of claims 11 to 14, wherein
the controlling includes controlling charging of a battery included in the energy storage system by using power, which is generated by the photovoltaic module and remains after being used to respond to the load.
